# EUROPEAN PATENT APPLICATION

(11) **EP 2 311 899 A1**
(43) Date of publication of application: **20.04.2011**
(21) Application number: 09804935.6
(22) Date of filing: 03.08.2009
(51) Int. Cl.: C08G 65/333, C08F 299/02, C09D 4/02, C09D 127/12, C09D 133/24

(54) **FLUORINE COMPOUND AND ACTIVE-ENERGY-RAY-CURABLE RESIN COMPOSITION COMPRISING SAME**

(30) Priority: 08.08.2008 JP 2008205499; 30.09.2008 JP 2008253245
(71) Applicant: DIC Corporation, Tokyo 174-8520 (JP)
(72) Inventor: OHTAGURO Tsuneyuki, Ichihara-shi Chiba 290-8585 (JP); NOGUCHI Jun, Ichihara-shi Chiba 290-8585 (JP); YAMASHINA Yohzoh, Ichihara-shi Chiba 290-8585 (JP)
(74) Representative: Lloyd, John Scott
(86) International application number: PCT/JP2009/063723
(87) International publication number: WO 2010/016452

(57) **Abstract**

Provided is a fluorine compound represented by the following general formula (1) which has excellent compatibility with a resin and the like, and can be produced into a coating film having excellent stain-proof properties. Also provided is an active energy ray-curable resin composition using the compound. 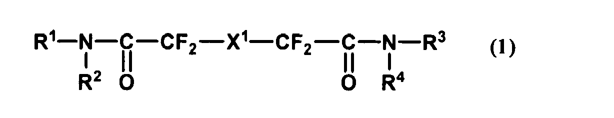 (In the general formula (1), X¹ represents a poly(perfluoroalkylene ether) chain; and R¹ to R⁴ independently represent a hydrogen atom, an alkyl group, following general formula (2) or (3), provided that at least one of R¹ and R² is following general formula (2) or (3) and at least one of R³ and R⁴ is following general formula (2) or (3).) 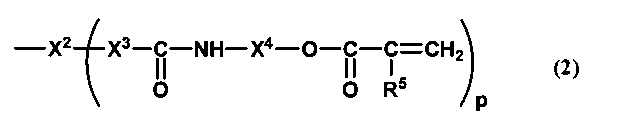 (In the general formula (2), X² represents a linear or branched hydrocarbon group; X³ represents an oxygen atom or a sulfur atom; X⁴ represents a linear or branched alkylene group; R⁵ represents a hydrogen atom or a methyl group; and p represents an integer of 1 to 5.) 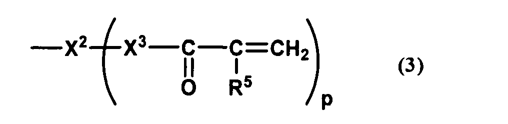 (In the general formula (3), X², X³, R⁵ and p are as described above.)

## Description

### Technical Field

The present invention relates to a fluorine compound having excellent stain-proof property, compatibility with a resin or the like, and coating smoothness, and further relates to an active energy ray-curable resin composition using the fluoride compound.

### Background Art

Conventional active energy ray-curable resins, even when simply applied onto plastic surfaces and cured, can easily impart surface hardness and anti-scratching property thereto, and thus are used in hard coating materials for plastic or the like. Such hard coating materials require characteristics such as stain-proof property against attachment of stain, and anti-static property for preventing dust attachment and electrostatic hazard, further to coating hardness or anti-scratching property.

Among those properties, in order to improve stain-proof property, an active energy ray-curable resin composition containing a poly(perfluoroalkylene ether) being effective in stain-proof property, and a fluoride compound having a polymerizable group introduced into a molecule thereof for the purpose of improving maintenance of stain-proof property, has been proposed (for example, see References 1 and 2). Reference 1 proposes, as the fluorine compound, a urethane acrylate having a poly(perfluoroalkylene ether) chain obtained by reacting a polyisocyanate with a poly(perfluoroalkyene ether) having a hydroxyl group and a monomer having a hydroxyl group and an acryloyl group.

Reference 2 proposes, as the fluorine compound, a urethane acrylate having a poly(perfluoroalkyene ether) chain obtained by reacting a triisocyanate, which is a trimer of diisoacyanate, with a poly(perfluoroalkylene ether) having a hydroxyl group and a monomer having a hydroxyl group and an acryloyl group.

In the preparation of a urethane acrylate having a poly(perfluoroalkylene ether) chain disclosed in References 1 and 2, it is difficult, however, to react a triisocyanate compound with a poly(perfluoroalkylene ether) having a hydroxyl group and an acryl-based monomer having a hydroxyl group in an appropriate ratio and thus a compound having only an acryloyl group or a compound having only a poly(perfluoroalkylene ether) chain is produced as a byproduct. Hence, it is not possible to obtain only a compound having both a poly(perfluoroalkylene ether) chain and an acryloyl group in a molecule thereof.

Besides, the compound having only a poly(perfluoroalkylene ether) chain is likely to have a high molecular weight. If the compound is used in an active energy ray-curable resin composition, the compound has low compatibility with other components. Hence, a coated film made of the active energy ray-curable resin composition has problems such as white turbidity or the like. Further, the urethane acrylate having a poly(perfluoroalkylene ether) chain has low compatibility with the compound having only a poly(perfluoroalkylene ether) chain and the compound having only an acryloyl group and thus has problems such as occurrence of phase separation or the like.

### Citation List

### Patent Document

Patent Document 1: Japanese Patent Application Laid-Open (JP-A) No. 2001-019736
Patent Document 2: WO 2003/002628

### Summary of Invention

### Technical Problem

The present invention is directed to a fluorine compound which has excellent compatibility with a resin or the like and can be produced into a cured coating film having excellent stain-proof property, and a method of preparing the same. The present invention is further directed to an active energy ray-curable resin composition using the fluoride compound, which may form a cured coating film having excellent stain-proof property.

### Solution to Problem

The present inventors have conducted a great deal of research in consideration of these problems, and ultimately found that a fluorine compound obtained by reacting a compound having a poly(perfluoroalkylene ether) chain and having carboxyl groups or carboxylic acid alkyl esters at both terminal ends thereof with an alkly amine having a hydroxyl group or a thiol group, and then further reacting the resulting product with a (meth)acrylate having an isocyanate group, or, with a (meth)acrylic acid, a (meth)acryloyl halide or a (meth)acrylic anhydride, has excellent compatibility with a resin, and a cured coating film of the fluorine compound or an active energy ray-curable resin composition using the fluorine compound has excellent stain-proof property. Based on this finding, the present invention has been completed.

The present invention provides a fluorine compound represented by the following general formula (1).

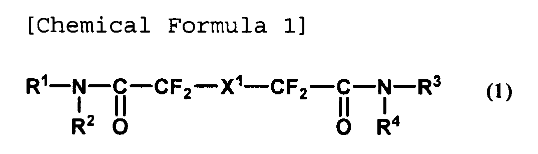

(In the general formula (1), X¹ represents a poly(perfluoroalkylene ether) chain; and R¹ to R⁴ independently represent a hydrogen atom, an alkyl group, following general formula (2) or (3), provided that at least one of R¹ and R² is following general formula (2) or (3) and at least one of R³ and R⁴ is following general formula (2) or (3).)

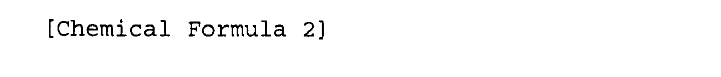

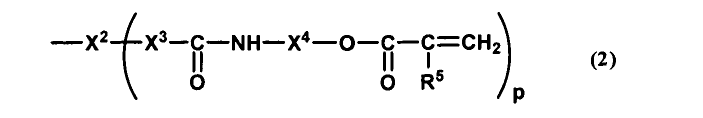

(In the general formula (2), X² represents a linear or branched hydrocarbon group; X³ represents an oxygen atom or a sulfur atom; X⁴ represents a linear or branched alkylene group; R⁵ represents a hydrogen atom or a methyl group; and p represents an integer of 1 to 5.)

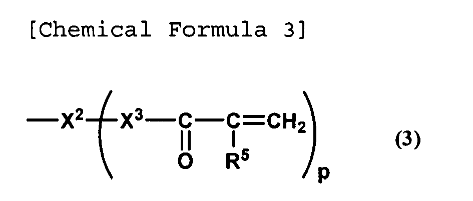

(In the general formula (3), X² represents a linear or branched hydrocarbon group; X³ represents an oxygen atom or a sulfur atom; R⁵ represents a hydrogen atom or a methyl group; and p represents an integer of 1 to 5.)

The present invention further provides a preparation method suitable for the fluorine compound, an active energy ray-curable resin composition comprising the fluorine compound, an article having a cured coating film of the fluorine compound or the active energy ray-curable resin composition using the fluorine compound.

### Advantageous Effects of Invention

The fluorine compound of the present invention has excellent compatibility with a resin or the like, and its cured coating film has excellent stain-proof property and a high content of fluorine atoms. For these reasons, if the fluorine compound is used alone, a cured coating film having a low refractive index and excellent stain-proof property may be obtained. Further, if the fluorine compound of the present invention is added as an additive to an active energy ray-curable resin, a hard coating material or the like having excellent stain-proof property may be obtained.

Thus, the fluorine compound of the present invention is useful in a protecting film for protecting a material requiring such characteristics from stain or scratches, an anti-reflection film or an anti-glare film used in flat panel displays such as a liquid crystal display, a plasma display, and an organic EL display, or the like.

Further, it may be used over wide ranges in a coating material of a protecting film for a polarization plate for a liquid crystal display, which is represented by a TAC film; a coating material or an ink or a black resist for a black matrix used in a color filter of a liquid crystal display; a hard coating material for a touch panel, a cellular phone case or a liquid crystal display of a cellular phone; an optical component such as an optical fiber clad material, an optical lens and a light waveguide; a liquid crystal-sealing material, various optical sealing materials and an optical adhesive, or the like.

### Brief Description of Drawings

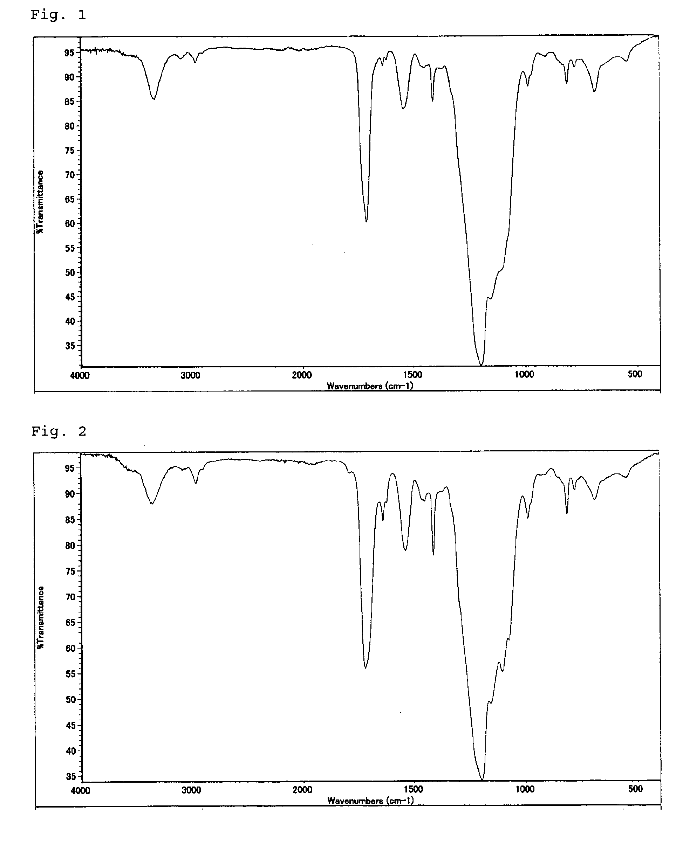

Fig. 1 is an IR spectrum of a fluorine compound (1) obtained in Example 1.
Fig. 2 is an IR spectrum of a fluorine compound (2) obtained in Example 2.

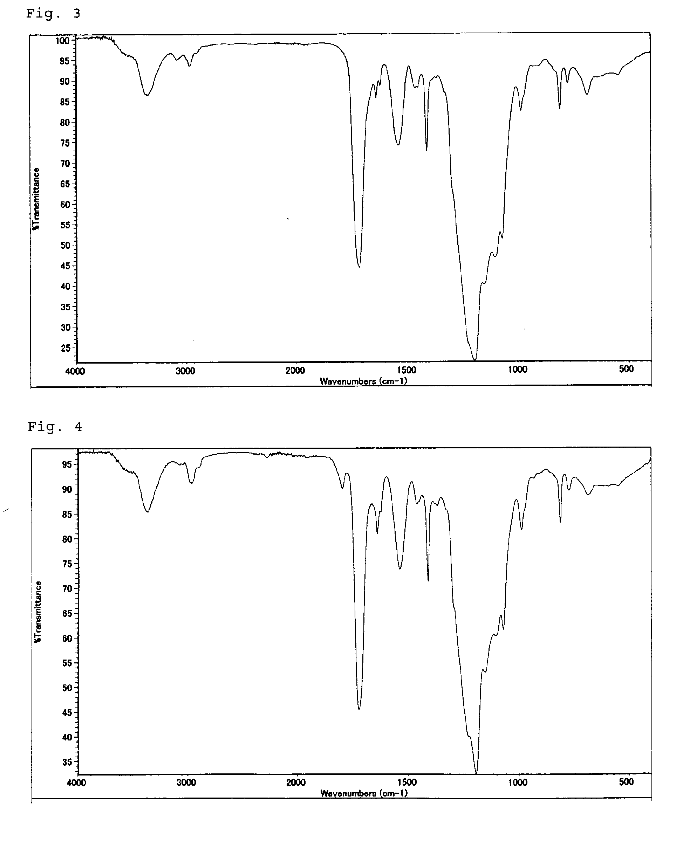

Fig. 3 is an IR spectrum of a fluorine compound (3) obtained in Example 3.
Fig. 4 is an IR spectrum of a fluorine compound (4) obtained in Example 4.

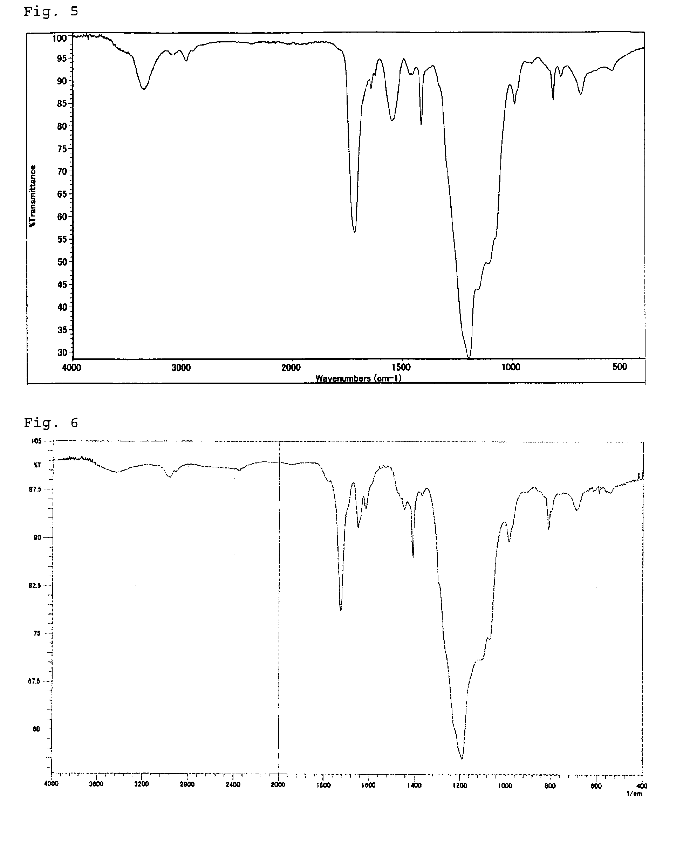

Fig. 5 is an IR spectrum of a fluorine compound (5) obtained in Example 5.
Fig. 6 is an IR spectrum of a fluorine compound (6) obtained in Example 6.

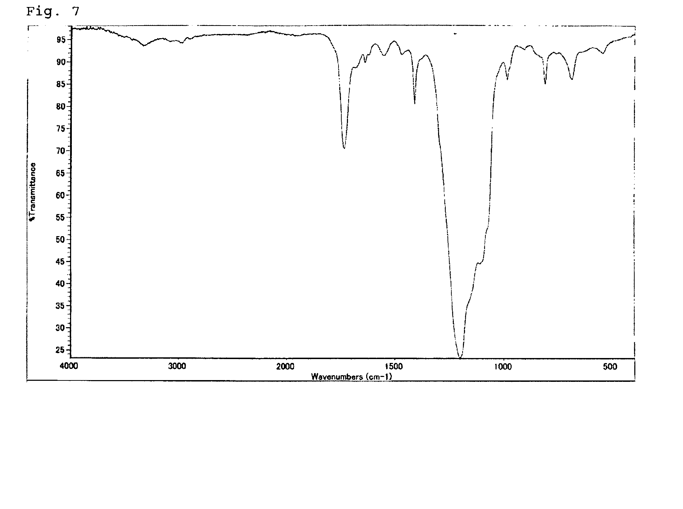

Fig. 7 is an IR spectrum of a fluorine compound (7) obtained in Example 7.

### Description of Embodiments

The fluorine compound of the present invention is represented by the following general formula (1).

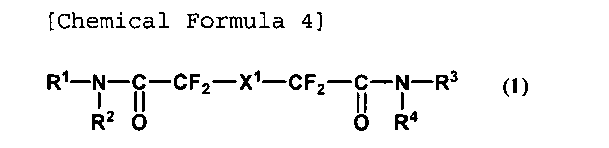

(In the general formula (1), X¹ represents a poly(perfluoroalkylene ether) chain; and R¹ to R⁴ independently represent a hydrogen atom, an alkyl group, following general formula (2) or (3), provided that at least one of R¹ and R² is following general formula (2) or (3) and at least one of R³ and R⁴ is following general formula (2) or (3).)

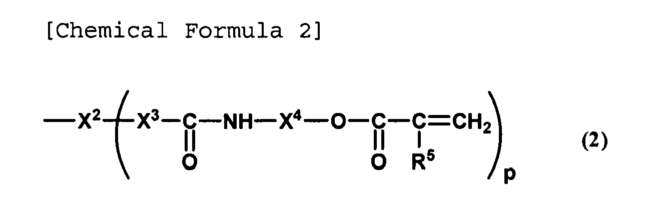

(In the general formula (2), X² represents a linear or branched hydrocarbon group; X³ represents an oxygen atom or a sulfur atom; X⁴ represents a linear or branched alkylene group; R⁵ represents a hydrogen atom or a methyl group; and p represents an integer of 1 to 5.)

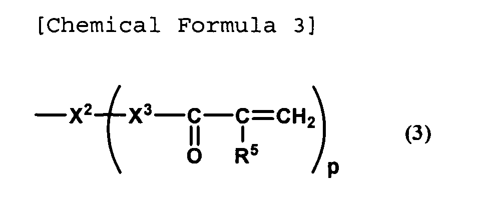

(In the general formula (3), X² represents a linear or branched hydrocarbon group; X³ represents an oxygen atom or a sulfur atom; R⁵ represents a hydrogen atom or a methyl group; and p represents an integer of 1 to 5.)

X¹ in the general formula (1) represents a poly(perfluoroalkylene ether) chain, and specific examples thereof include those represented by the following general formula (4).

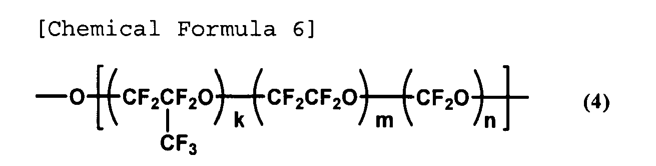

(In the general formula (4), k, m and n independently represent integers of 0 to 50, provided that there is no case that all of k, m and n are 0.)

The general formula (4) contains, as the perfluoroalkylene, structural units of perfluoropropylene, perfluoroethylene, and perfluoromethylene, and it may be one in which a block of poly(perfluoropropylene ether) chain formed of a series of perfluoropropylene structural units, a block of poly(perfluoroethylene ether) chain formed of a series of perfluoroethylene structural units, and a block of poly(perfluoromethylene ether) chain formed of a series of perfluoromethylene structural units are linked, alternatively it may be one in which structural units of perfluoropropylene, structural units of perfluoroethylene, and structural units of perfluoromethylene are randomly linked.

In addition, k, m and n in the general formula (4) independently represent integers of 0 to 50, and preferably, integers of 0 to 20, provided that there is no case that all of k, m and n are 0.

A number average molecular weight (polystyrene equivalent) of the general formula (4) is preferably in a range of 800 to 3,000, and particularly preferably 1000 to 2,000. Further, a weight average molecular weight (polystyrene equivalent) of the formula is preferably in a range of 1,500 to 20,000, and particularly preferably 2,000 to 5,000. Thus, k, m and n in the general formula (4) may be preferably integers to meet these molecular weights.
The above molecular weight ranges are preferable because, when used in an active energy ray-curable resin composition, good coating hardness, curability, and compatibility may be achieved.

x² in the general formula (2) or (3) represents a linear or branched hydrocarbon group, which is selected depending on the number of p. When p is 1, examples of the hydrocarbon group include a methylene group, an ethylene group, a propylene group, a butylene group, and the like. These groups may have substituent(s).

Alternatively, when p is 2 or 3, examples of the hydrocarbon group include a hydrocarbon group represented by the following general formula (5) and the like. Here, when p is 2, s is 1 and t is 2. Also, when p is 3, s is 0 and t is 3. Also, R is an alkyl group having 1 to 4 carbon atoms. In addition, [*] in the general formula (5) indicates a site binding to a nitrogen atom in the general formula (1), and the other binding site indicates a site binding to X³ in the general formula (2) or (3).

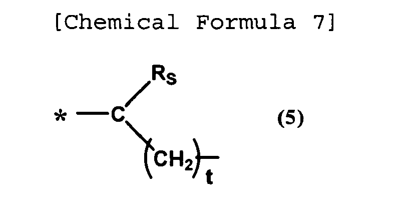

Further, when p is 4 or more, examples of the hydrocarbon group include a hydrocarbon group represented by the following general formula (6) and the like. Here, q represents an integer of 3 or more and equals p minus one. In addition, [*] in the general formula (6) indicates a site binding to a nitrogen atom in the general formula (1), and the other binding site indicates a site binding to X³ in the general formula (2) or (3).

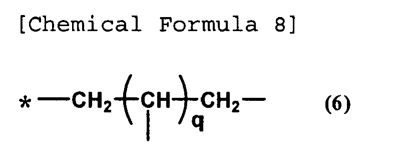

X³ in the general formula (2) or (3) is an oxygen atom or a sulfur atom.

X⁴ in the general formula (2) represents a linear or branched alkylene group, which may include, for example, a methylene group, an ethylene group, a propylene group, a butylene group, following general formula (7), following general formula (8), and the like. These groups may have substituent(s).

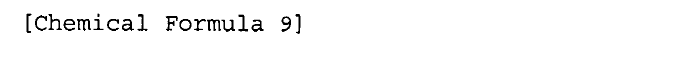

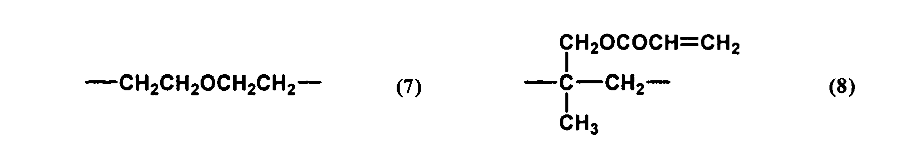

R⁵ in the general formula (2) or (3) is a hydrogen atom or a methyl group; however, generally in radical polymerization, R⁵ is preferably a hydrogen atom, for excellent radical polymerization property and high curability.

In the method of preparing the fluorine compound of the present invention represented by the general formula (1), there is a difference between a case wherein any one of R¹ to R⁴ in the general formula (1) is the general formula (2) and another wherein it is the general formula (3).

One exemplary method of preparing the fluorine compound of the present invention in which any one of R¹ to R⁴ of the general formula (1) is general formula (2) comprises a first process of reacting a poly(perfluoroalkylene ether) having carboxyl groups or carboxylic acid alkyl esters at both terminal ends thereof with an alkyl amine having a hydroxyl group or a thiol group, and a second process of reacting the reaction product obtained from the first process with a (meth)acrylate having an isocyanate group.

The aforementioned alkyl amine having a hydroxyl group or a thiol group may be a primary or secondary amine, examples thereof include primary amines such as monoethanolamine, 2-mercaptoethanol, 2-amino-1-ethanol, 6-amino-1-hexanol, serinol, tris(hydroxymethyl)methylamine, bishomotris, and 1-amino-1-deoxy-D-sorbitol; secondary amines such as N-(methylamino)ethanol, 2-(t-butylamino)ethanol, diethanolamine, diisopropanolamine, N-methyl-D-glucamine, disorbitylamine, 1-amino-2-methyl-propanethiol, 3-pyrrolidinol, and 2-pyrrolidinemethanol.

Examples of the aforementioned (meth)acrylate having an isocyanate group include 2-acryloyloxyethyl isocyanate, 2-methacryloyloxyethyl isocyanate, 1,1-bis(acryloyloxymethyl)ethyl isocyanate, 1,1-bis(methacryloyloxymethyl)ethyl isocyanate, 2-(acryloylethoxy)-ethyl isocyanate, 2-(methacryloylethoxy)-ethyl isocyanate, and the like.

As reaction conditions of the first process, a reaction temperature of 80 to 180 °C and a reaction time of 0.5 to 5.0 hours are preferable. In addition, as reaction conditions of the second process, it is preferable that a (meth)acrylate having an isocyanate group is added dropwise to the reaction product obtained from the first process while the temperature is maintained at 40 to 130 °C and then a reaction is performed at a temperature of 60 to 120 °C for a reaction time of 1 to 10 hours.

In the first process, the reaction can be carried out without a solvent; however, in the case of using an alkyl amine having a hydroxyl group or a thiol group, and not melting into a liquid even at reaction temperature, use of a solvent dissolving the aforementioned alkyl amine may be effective to proceed the reaction smoothly. Examples of the solvent include: ester-based solvents such as ethyl acetate, and butyl acetate; ether-based solvents such as diisopropyl ether, and dimethoxyethane; halogen-based solvents such as dichloromethane, and dichloroethane; aromatic solvents such as toluene, and xylene; ketone-based solvents such as methyl ethyl ketone, and methyl isobutyl ketone; alcohol-based solvents such as methanol, ethanol, and isopropanol; aprotic polar solvents such as dimethyl formamide, dimethyl sulfoxide; and the like. Among them, ether-based solvents and alcohol-based solvents are preferable.

In the first process, as the reaction proceeds, water is produced in the case of using a poly(perfluoroalkylene ether) having carboxyl groups at both terminal ends thereof, and alcohol is produced in the case of using poly(perfluoroalkylene ether) having carboxylic acid alkyl esters at both terminal ends thereof. Thus, for smoother reaction, it is preferable to carry out the reaction while removing water or alcohol under reduced pressure. As methods to remove water, azeotropic dehydration using toluene or the like may be employed.

Also, in the first process, for smoother reaction, a method to react a poly(perfluoroalkylene ether) having carboxylic acid alkyl esters at both terminal ends thereof with an alkyl amine having a hydroxyl group or a thiol group while removing produced alcohol under reduced pressure is preferable.

On the other hand, in the second process, the reaction can be carried out with or without a solvent. Examples of the solvent include: ester-based solvents such as ethyl acetate, and butyl acetate; ether-based solvents such as diisopropyl ether, and dimethoxyethane; halogen-based solvents such as dichloromethane, and dichloroethane; aromatic solvents such as toluene, and xylene; ketone-based solvents such as methyl ethyl ketone, and methyl isobutyl ketone; aprotic polar solvents such as dimethyl formamide, and dimethyl sulfoxide; and the like. Among them, ester-based solvents, ketone-based solvents and ether-based solvents are preferable.

In addition, to accelerate a reaction in the second process, the reaction may be preferably performed in the presence of a urethane-forming catalyst. Examples of the urethane-forming catalyst include: amines such as pyridine, pyrrole, triethylamine, diethylamine, and dibutylamine; phosphines such as triphenylphosphine, and triethylphosphine; organic tin compounds such as dibutyl tin dilaurate, octyl tin trilaurate, octyl tin diacetate, dibutyl tin diacetate, and tin octylate; organic metal compounds such as zinc octylate; and the like. Further, combinated use of organic tin compounds and amines is preferable for smoother urethanization reaction.

Next, one exemplary method of preparing the fluorine compound of the present invention in which any one of R¹ to R⁴ of the general formula (1) is general formula (3) comprises a first process of reacting a compound having a poly(perfluoroalkylene ether) chain and having carboxyl groups or carboxylic acid alkyl esters at both terminal ends thereof with an alkyl amine having a hydroxyl group or a thiol group, and a second process of reacting the reaction product obtained from the first process with a (meth)acrylic acid, a (meth)acryloyl halide, or a (meth)acrylic anhydride.

The alkyl amine having a hydroxyl group or a thiol group may be the same as described above.

Reaction conditions of the first process may be the same as described above.

In the second process, the reaction product obtained from the first process may be reacted with a (meth)acrylic acid or a (meth)acryloyl halide or a (meth)acrylic anhydride.

In the case of performing dehydrative condensation of a (meth)acrylic acid, examples of the solvent include: aromatic solvents such as toluene, and xylene; and ketone-based solvents such as methyl ethyl ketone, and methyl isobutyl ketone; and the like. An acid catalyst is used in the reaction, and a taget compound may be obtained by azeotropic dehydration under reflux. Examples of the acid catalyst include methanesulfonic acid, p-toluenesulfonic acid, cresol sulfonic acid, cation exchange resin, and the like.

In the case of reacting a (meth)acryloyl halide, the reaction may be carried out with or without solvent. In the case of using a solvent, examples of the solvent include: aromatic solvents such as toluene, and xylene; aprotic polar solvents such as methyl ethyl ketone, methyl isobutyl ketone, dimethyl formamide, and dimethyl sulfoxide; ester-based solvents such as ethyl acetate, and butyl acetate; ether-based solvents such as diisopropyl ether, and dimethoxy ethane; halogen-based solvents such as dichloromethane, and dichloroethane; and the like. Among them, ester-based solvents, ketone-based solvents, and ether-based solvents are preferable. In addition, for the purpose of neutralizing halogenated hydrogen generated in the reaction, an amine such as triethylamine may be used. A reaction temperature of 10 to 60°C and a reaction time of 0.5 to 5 hours are preferable. After completion of the reaction, a target compound may be obtained by removing an amine salt with filtration or water washing.

In the case of reacting a (meth)acrylic anhydride, examples of the solvent include: aromatic solvents such as toluene, and xylene; aprotic polar solvents such as methyl ethyl ketone, methyl isobutyl ketone, dimethyl formamide, and dimethyl sulfoxide; ester-based solvents such as ethyl acetate, and butyl acetate; ether-based solvents such as diisopropyl ether, and dimethoxy ethane; halogen-based solvents such as dichloromethane, and dichloroethane; and the like. Among them, ester-based solvents, ketone-based solvents, and ether-based solvents are preferable. The reaction may be accelerated by an acid catalyst. Examples of the acid catalyst include mineral acid such as sulfuric acid, methanesulfonic acid, p-toluenesulfonic acid, cresol sulfonic acid, and the like. A reaction temperature of 20 to 100°C and a reaction time of 0.5 to 8.0 hours are preferable. After completion of the reaction, a target compound may be obtained by conducting neutralization and elimination of byproduced (meth)acrylic acid with caustic water or the like.

When the fluorine compound of the present invention is used as an additive to an active energy ray-curable resin composition, a content of the fluorine compound to be blended may be preferably 0.01 to 10.0 parts by mass, based on 100 parts by mass of a non-volatile content of the resin composition. Particularly, to effectively modify a coating surface of a resin composition while not harming original physical properties of the resin composition such as coating hardness, the content of the fluorine compound may be preferably 0.05 to 3.0 parts by mass.

As main components of the active energy ray-curable resin composition, a polymerizable monomer (A) and a polymerizable resin (B) may be mentioned. Further, the term "(meth)acrylate" as used herein refer to any one or both of acrylate and methacrylate. The term "(meth)acrylic acid" as used herein refer to any one or both of acrylic acid and methacrylic acid.

Among the aforementioned polymerizable monomer (A), examples of a monofunctional monomer include N-vinyl caprolactam, N-vinyl pyrrolidone, N-vinyl carbazole, vinylpyridine, acrylamide, N,N-dimethyl (meth)acrylamide, isobutoxymethyl (meth)acrylamide, t-octyl (meth)acrylamide, diacetone (meth)acrylamide, dimethylaminoethyl (meth)acrylate, diethylaminoethyl (meth)acrylate, 7-amino-3,7-dimethyloctyl (meth)acrylate, acryloyl morpholine, lauryl (meth)acrylate, dicyclopentadienyl (meth)acrylate, dicyclopentenyloxyethyl (meth)acrylate, dicyclopentenyl (meth)acrylate, tetrahydrofurfuryl (meth)acrylate, ethylenediethylene glycol (meth)acrylate, butoxyethyl (meth)acrylate, methyltriethylene diglycol (meth)acrylate, phenoxyethyl (meth)acrylate, and the like. These monofunctional monomers may be used alone or in a combination of two or more kinds.

Among the aforementioned polymerizable monomer(A), examples of a polyfunctional monomer include trimethylolpropane tri(meth)acrylate, triethylene oxide-modified trimethylolpropane tri(meth)acrylate, tripropylene oxide-modified glycerine tri(meth)acrylate, triethylene oxide-modified glycerine tri(meth)acrylate, triepichlorohydrin-modified glycerine tri(meth)acrylate, 1,3,5-triacryloylhexahydro-s-triazine, tris(acryloyloxyethyl) isocyanurate, pentaerythritol tri(meth)acrylate, pentaerythritol tetra(meth)acrylate, tetraethylene oxide-modified pentaerythritol tetra(meth)acrylate, ditrimethylolpropane tetra(meth)acrylate, diethylene oxide-modified ditrimethylolpropane tetra(meth)acrylate, dipentaerythritol penta(meth)acrylate, alkyl-modified dipentaerythritol pentaacrylate, alkyl-modified dipentaerythritol tetraacrylate, ε-caprolacton-modified dipentaerythritol hexa(meth)acrylate, dipentaerythritol penta(meth)acrylate, dipentaerythritol hexa(meth)acrylate, hexaethylene oxide-modified sorbitol hexa(meth)acrylate, hexakis(methacryloyloxyethyl)cyclotriphosphazene, and the like. These polyfunctional monomers may be used alone or in a combination of two or more kinds.

Examples of the aforementioned polymerizable resin (B) include an epoxy (meth)acrylate which is obtained by reacting a compound having a plurality of glycidyl group with a (meth)acrylic acid, and a urethane (meth)acrylate which is obtained by reacting an aliphatic or aromatic polyisocyanate with a (meth)acrylate having a hydroxyl group, and the like. These polymerizable resin (B) may be used alone or in a combination of two or more kinds.

Examples of the aforementioned epoxy (meth)acrylate include those obtained by reacting a (meth)acrylic acid with a glycidyl group of epoxy resins such as bisphenol A type epoxy resin, bisphenol F type epoxy resin, phenol novolac type epoxy resin, cresol novolac type epoxy resin, and the like.

Examples of the aliphatic polyisocyanate that may be used as a material of the aforementioned urethane (meth)acrylate include tetramethylene diisocyanate, pentamethylene diisocyanate, hexamethylene diisocyanate, heptamethylene diisocyanate, octamethylene diisocyanate, decamethylene diisocyanate, 2-methyl-1,5-pentane diisocyanate, 3-methyl-1,5-pentane diisocyanate, dodecamethylene diisocyanate, 2-methylpentamethylene diisocyanate, 2,2,4-trimethylhexamethylene diisocyanate, 2,4,4-trimethylhexamethylene diisocyanate, isophorone diisocyanate, norbornane diisocyanate, hydrogenated diphenylmethane diisocyanate, hydrogenated tolylene diisocyanate, hydrogenated xylene diisocyanate, hydrogenated tetramethylxylene diisocyanate, cyclohexyl diisocyanate, and the like.

In addition, examples of the aromatic polyisocyanate that may be used as a material of the aforementioned urethane (meth)acrylate include tolylene diisocyanate, 4,4'-diphenylmethane diisocyanate, xylene diisocyanate, 1,5-naphthalene diisocyanate, tolidine diisocyanate, p-phenylene diisocyanate, and the like.

On the other hand, examples of the (meth)acrylate having a hydroxyl group, which may be used as a material of the urethane (meth)acrylate include: mono(meth)acrylate of dihydric alcohol such as hydroxyethyl (meth)acrylate, hydroxypropyl (meth)acrylate, hydroxybutyl (meth)acrylate, pentanediol mono(meth)acrylate, hexanediol mono(meth)acrylate, neopentyl glycol mono(meth)acrylate, and hydroxypivalic acid neopentyl glycol mono(meth)acrylate; mono- or di-(meth)acrylate of trihydric alcohol such as trimethylolpropane di(meth)acrylate, ethoxylated trimethylolpropane (meth)acrylate, propoxylated trimethylolpropane di(meth)acrylate, glycerin di(meth)acrylate, and di(meth)acryloyloxyethyl-hydroxyethyl-isocyanurate, or, mono- and di-(meth)acrylate having hydroxyl group in which a portion of the alcoholic hydroxyl groups of the mono- or di-(meth)acrylate are modified with ε-caprolactone; a compound having one hydroxyl group and a three or more (meth)acryloyl groups in the molecule such as pentaerythritol tri(meth)acrylate, ditrimethylolpropane tri(meth)acrylate, and dipentaerythritol penta(meth)acrylate, or, polyfunctional (meth)acrylate in which the hydroxyl group of the compound is modified with ε-caprolactone; a (meth)acrylate compound having an oxyalkylene chain such as dipropylene glycol mono(meth)acrylate, diethylene glycol mono(meth)acrylate, polypropylene glycol mono(meth)acrylate, and polyethylene glycol mono(meth)acrylate; a (meth)acrylate compound having an oxyalkylene chain of a block structure such as polyethylene glycol-polypropylene glycol mono(meth)acrylate, and polyoxybutylene-polyoxypropylene mono(meth)acrylate; a (meth)acrylate compound having an oxyalkylene chain of a random structure such as poly(ethylene glycol-tetramethylene glycol) mono(meth)acrylate, and poly(propylene glycol-tetramethylene glycol) mono(meth)acrylate; and the like.

The reaction between the aforementioned aliphatic polyisocyanate or aromatic polyisocyanate and the (meth)acrylate having a hydroxyl group may be performed in an ordinary method in the presence of a urethane-forming catalyst. Examples of the urethane-forming catalyst include: amines such as pyridine, pyrrole, triethylamine, diethylamine, and dibutylamine; phosphines such as triphenylphosphine, and triethylphosphine; organic tin compounds such as dibutyl tin dilaurate, octyl tin trilaurate, octyl tin diacetate, dibutyl tin diacetate, and tin octylate; organic metal compounds such as zinc octylate; and the like.

Among these urethane acrylate resins, particularly preferable are resins obtained by reacting an aliphatic polyisocyanate with a (meth)acrylate having a hydroxyl group, from the viewpoints of imparting excellent transparency and curability to the cured coating film.

The active energy ray-curable resin composition of the present invention refers to a composition which is cured by irradiating an active energy ray. The term "active energy ray" refers to an ultraviolet ray, or an ionizing radiation such as an electron beam, an alpha ray, a beta ray, or a gamma ray. When the ultraviolet ray is used as the active energy ray, a photopolymerization initiator (C) is added to the active energy ray-curable resin composition. If necessary, a photosensitizer may be further added. Meanwhile, when the ionizing radiation such as an electron beam, an alpha ray, a beta ray, or a gamma ray is used, the active energy ray-curable resin composition may be rapidly cured without using the photopolymerization initiator or photosensitizer, hence, the photopolymerization initiator or photosensitizer is not necessarily added.

Examples of the aforementioned photopolymerization initiator (C) include an intramolecular cleavage type photopolymerization initiator and a hydrogen abstraction type photopolymerization initiator. Examples of the intramolecular cleavage type photopolymerization initiator include: acetophenone compounds such as diethoxy acetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl) ketone, 1-hydroxycyclohexyl phenyl ketone, 2-methyl-2-morpholino(4-thiomethylphenyl)propan-1-one, and 2-benzyl-2-dimethylamino-1-(4-morpholinophenyl)-butane; Benzoins such as benzoin, benzoin methyl ether, and benzoin isopropyl ether; acylphosphine oxide compounds such as 2,4,6-trimethylbenzoindiphenylphosphine oxide, and bis(2,4,6-trimethylbenzoyl)-phenylphosphine oxide; benzyl, methylphenyl glyoxylate; and the like.

On the other hand, examples of the hydrogen abstraction type photopolymerization initiator include: benzophenone compounds such as benzophenone, methyl o-benzoyl benzoate-4-phenyl benzophenone, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, and 3,3'-dimethyl-4-methoxybenzophenone; thioxanthone compounds such as 2-isopropyl thioxanthone, 2,4-dimethyl thioxanthone, 2,4-diethyl thioxanthone, and 2,4-dichlorothioxanthone; aminobenzophenone compounds such as Michler's ketone, and 4,4'-diethylaminobenzophenone; 10-butyl-2-chloroacridone, 2-ethyl anthraquinone, 9,10-phenanthrenequinone, camphorquinone, and the like. These photopolymerization initiator (C) may be used alone or in a combination of two or more kinds.

Examples of the aforementioned photosensitizer also include amines such as aliphatic amines and aromatic amines, ureas such as o-tolyl thiourea, sulfur compounds such as sodium diethyl dithiophosphate, s-benzyl isothiuronium-p-toluenesulfonate, and the like.

The amount of photopolymerization initiator and photosensitizer used are individually 0.01 to 20 parts by mass, and more preferably, 0.3 to 10 parts by mass, based on 100 parts by mass of the non-volatile component of the active energy ray-curable resin composition.

Further, the active energy ray-curable resin composition of the present invention may be used in combination with various compounding materials for the purpose of adjusting viscosity or refraction index, or adjusting the color tone of the coating film or adjusting other properties of coating or physical properties of the coating film depending on a purpose such as use and properties within a range of not harming effects of the present invention. Examples of the compounding material include, various organic solvents, various resins such as acrylic resin, phenol resin, polyester resin, urethane resin, urea resin, melamine resin, alkyd resin, epoxy resin, polyamide resin, polycarbonate resin, petroleum resin, and fluorine resin, various organic or inorganic particles such as PTFE (polytetrafluoroethylene), polyethylene, carbon, titanium oxide, alumina, copper, and silica particles, polymerization initiator, polymerization inhibitor, antistatic agent, antifoaming agent, viscosity-adjusting agent, light-resistant stabilizer, weathering stabilizer, heat-resistant stabilizer, anti-oxidant, anti-rust agent, slipping agent, wax, gloss-adjusting agent, mold release agent, compatibilizing agent, conductivity-adjusting agent, pigment, dye, dispersing agent, dispersion stabilizer, silicone-based or hydrocarbon-based surfactant, and the like.

When the fluorine compound of the present invention is used alone or used as the active energy ray-curable resin composition made thereof, the organic solvent among said compounding materials may be desirably used as a diluting solvent for adjusting viscosity to provide coating suitability for a substrate. Examples of the diluting solvent include: aromatic hydrocarbons such as toluene, and xylene; alcohols such as methanol, ethanol, and isopropanol; esters such as ethyl acetate, and ethyl cellosolve acetate; ketones such as methyl ethyl ketone, methyl isobutyl ketone, and cyclohexanone; and the like, which may be used alone or in a combination of two or more kinds.

Examples of the substrate include: a plastic substrate; a ceramic substrate such as glass; or a metal substrate such as iron or aluminum. The application is particularly useful for a plastic substrate. Examples of materials of the plastic substrate includes: polyester resin such as polyethylene terephthalate, polybutylene terephthalate, and polyethylene naphthalate; polyolefin resin such as polypropylene, polyethylene, and polymethylpentene-1; cellulose resin such as triacetyl cellulose; polystyrene resin, polyamide resin, polycarbonate resin, norbornene resin, modified norbornene resin, cyclo olefin copolymer, and the like. The substrate formed by laminating two or more kinds of substrates made of the aforementioned resins may be used. The plastic substrate which is formed in a film or sheet shape may be used.

As a method to apply the fluorine compound of the present invention or the active energy ray-curable resin composition using the fluorine compound onto a substrate, gravure coating, roll coating, comma coating, air-knife coating, kiss coating, spray coating, curtain-flow coating, dip coating, spinner coating, whirler coating, brush coating, solid coating by means of a silk screen, wire-bar coating, flow coating and the like may be mentioned. Printing method such as offset printing, letterpress printing may be used as well. Among them, gravure coating, roll coating, comma coating, air-knife coating, kiss coating, wire-bar coating and flow coating are preferable since a coating film of more uniform thickness can be obtained.

Examples of the active energy ray that cures the fluorine compound of the present invention or the active energy ray-curable resin composition using the fluorine compound include active energy rays such as light, electron beam and radioactive ray. Specific examples of the energy source or the curing equipment include a sterilization lamp, a fluorescent lamp for ultraviolet ray, a carbon arc, a xenon lamp, a high pressure mercury lamp for copying, a medium pressure or a high pressure mercury lamp, an ultrahigh pressure mercury lamp, an electrodeless lamp, a metal halide lamp, an ultraviolet ray having natural light or the like as a light source, an electron beam by a scanning-type or curtain-type electron beam accelerator, and the like.

Among them, the active energy ray is particularly preferably an ultraviolet ray, and is preferably irradiated under inert gas atmosphere such as nitrogen gas from the viewpoint of promoting polymerization efficiency. Further, heat may be used in combination as an energy source, and also heat treatment may be conducted after curing by irradiation of active energy ray, as necessary.

Examples of the article having a cured coating film of the fluorine compound of the present invention or the active energy ray-curable resin composition using the fluorine compound include: a protecting film that protect articles from stain or scratches; an anti-reflection film or an anti-glare film, used in plat panel displays such as a liquid crystal display, a plasma display and an organic EL display; and the like.

Another examples include a protecting film for a polarization plate for a liquid crystal display, which is represented by a TAC film, a color filter for a liquid crystal display, which has a black matrix using the fluorine compound of the present invention or the active energy ray-curable resin composition using the fluorine compound, a touch panel, a cellular phone case, a liquid crystal display of a cellular phone, an optical fiber clad material, an optical lens, an optical waveguide, and the like.

### Examples

Hereinafter, the present invention will now be described in further detail with reference to Examples and Comparative Examples.

### (Example 1)

In a 50 ml reaction vessel, 30 g (0.02 mol) of poly(perfluoroalkylene ether) having carboxylic acid ethyl esters at both terminal ends thereof (the number (m) of perfluoroethylene groups is 8 on average and the number (n) of perfluoromethylene groups is 5 on average per one molecule), which is represented by following formula, and 2.56 g (0.042 mol) of monoethanolamine were placed, and heated with stirring at 100 °C for 2 hours. After being confirmed to become clear and homogeneous, under reduced pressure, the reaction liquid was further heated with stirring for 3 hours while produced ethanol is removed. After the reaction liquid was cooled to 60 °C or below, 57.7 g of methylethylketone (hereinafter referred to as "MEK") was added. Subsequently, 0.02 g of dibutyl tin dilaurate was added, and then 5.93 g (0.042 mol) of 2-acryloyloxyethyl isocyanate was added dropwise thereto over 30 minutes while the internal temperature was maintained at 50 to 60 °C. After the dropwise addition was completed, the reaction liquid was further stirred at 80 °C for 4 hours to obtain an MEK solution of fluorine compound (1) (40 % by mass of non-volatile content).

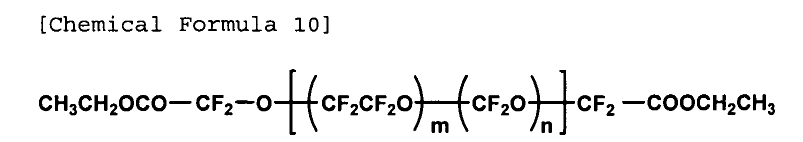

After MEK was distilled off from the obtained MEK solution of fluorine compound (1), spectrum analyses were conducted whereby the following spectra were obtained.
[IR spectrum]
810, 1410, 1650 cm⁻¹: acryloyl group
1710 cm⁻¹: amide group
1200 cm⁻¹: -CF₂-
[¹H-NMR spectrum]
(ppm, 400 MHz, solvent: acetone-d₆, standard: TMS)
3.35-3.50(m, 2H)
3.50-3.70(m, 2H)
4.10-4.25(m, 4H)
5.88 (d, J=10.4 Hz, 2H)
6.14 (dd, J=17.2, 10.4 Hz, 2H)
6.37 (d, J=17.6 Hz, 2H)

From the results of IR and NMR spectrum analyses, fluorine compound (1) was identified to be a compound of following structural formula.

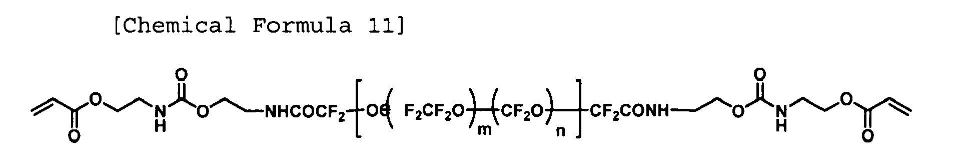

### (Example 2)

A MEK solution of fluorine compound (2) (40 % by mass of the non-volatile content) was obtained in the same manner as in Example 1, except that 4.41 g (0.042 mol) of diethanolamine was used in place of monoethanolamine used in Example 1, and MEK and acryloyloxyethyl isocyanate were added in amounts of 61.8 g and 13.1 g (0.093 mol), respectively.

After MEK was distilled off from the obtained MEK solution of fluorine compound (2), spectrum analyses were conducted whereby the following spectra were obtained.
[IR spectrum]
810, 1410, 1650 cm⁻¹: acryloyl group
1710 cm⁻¹: amide group
1200 cm⁻¹: -CF₂-
[¹H-NMR spectrum]
(ppm, 400 MHz, solvent: acetone-d₆, standard: TMS)
3.20-3.60(m, 12H)
3.65-3.95(m, 4H)
4.10-4.40(m, 16H)
4.90-5.00(br, 4H)
5.88-5.95(m, 4H)
6.10-6.25(m, 4H)
6.30-6.50(m, 4H)

From the results of IR and NMR spectrum analyses, the fluorine compound (2) was identified to be a compound of following structural formula.

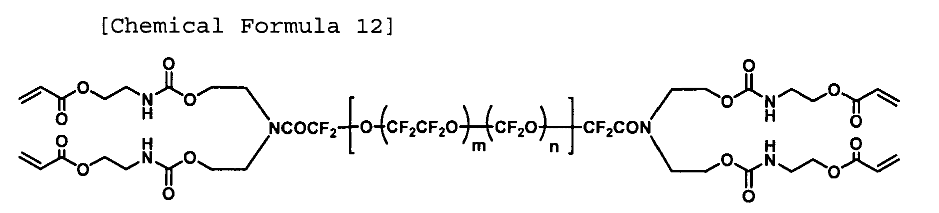

### (Example 3)

In a 50 ml reaction vessel, 30 g (0.02 mol) of poly(perfluoroalkylene ether) having carboxylic acid ethyl esters at both terminal ends thereof (the number (m) of perfluoroethylene group is 8 on average and the number (n) of perfluoromethylene group is 5 on average per one molecule), and 5.08 g (0.042 mol) of tris(hydroxymethyl)aminomethane were placed, and heated with stirring at 120°C for 2 hours. After being confirmed to become clear and homogeneous, the reaction liquid was further heated with stirring under reduced pressure for 3 hours. After the reaction liquid was cooled to 60°C or below, 79.3 g of MEK was added thereto. Subsequently, 0.02 g of dibutyl tin dilaurate was added, and then 17.8 g(0.126 mol) of 2-acryloyloxyethyl isocyanate was added dropwise thereto over 30 minutes while the internal temperature was maintained at 50 to 60°C. After the dropwise addition was completed, the reaction liquid was further stirred at 80°C for 4 hours to obtain a MEK solution of fluorine compound (3) (40% by mass of the non-volatile content).

After MEK was distilled off from the obtained MEK solution of fluorine compound (3), spectrum analyses were conducted whereby the following spectra were obtained.
[IR spectrum]
810, 1410, 1650 cm⁻¹: acryloyl group
1710 cm⁻¹: amide group
1200 cm⁻¹: -CF₂-
[¹H-NMR spectrum]
(ppm, 400 MHz, solvent: acetone-d₆, standard: TMS)
3.35-3.50(m, 12H)
4.10-4.25(m, 12H)
4.30-4.50(m, 12H)
5.88 (d, J=10.4 Hz, 6H)
6.05-6.20(m, 6H)
6.37 (d, J=17.2 Hz, 6H)

From the results of IR and NMR spectrum analyses, the fluorine compound (3) was identified to be a compound of following structural formula.

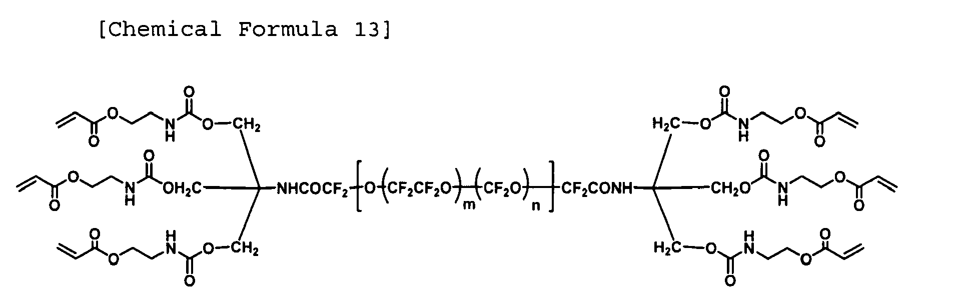

### (Example 4)

In a 50 ml reaction vessel, 30 g (0.02 mol) of poly(perfluoroalkylene ether) having carboxylic acid ethyl esters at both terminal ends thereof (the number (m) of perfluoroethylene groups is 8 on average and the number (n) of perfluoromethylene groups is 5 on average per one molecule), 8.20 g (0.042 mol) of N-methyl-D-glucamine and 38.4 g of dimethoxyethane (DME) were placed, and then heated with stirring under reflux for 4 hours. From the IR spectrum of the contents, an absorption band of ethylester disappeared at 1800 cm⁻¹, and a new absorption band of amide was observed at 1710 cm-¹. DME was distilled off under reduced pressure. Subsequently, 45.37 g of MEK and 0.02 g of dibutyl tin dilaurate were added, and then heated to an internal temperature of 60 °C. Afterwards, 29.65 g of 2-acryloyloxyethyl isocyanate was added dropwise over 1 hour while the internal temperature was maintained at 60 to 70 °C. After the dropwise addition was completed, the resulting solution was further stirred at 80 °C for 6 hours to obtain an MEK solution of fluorine compound (4) (40 % by mass of the non-volatile content).

After MEK was distilled off from the obtained MEK solution of fluorine compound (4), spectrum analyses were conducted whereby the following spectra were obtained.
[IR spectrum]
810, 1410, 1636 cm⁻¹: acryloyl group
1706 cm⁻¹. amide group
1200 cm⁻¹: -CF₂-
[¹H-NMR spectrum]
(ppm, 400 MHz, solvent: acetone-d₆, standard: TMS)
2.80-3.05(m, 8H)
3.35-3.55(m, 20H)
4.10-4.35(m, 26H)
5.85-5.95(m, 10H)
6.05-6.20(m, 10H)
6.30-6.55(m, 10H)

From the results of IR and NMR spectrum analyses, the fluorine compound (4) was identified to be a compound of following structural formula.

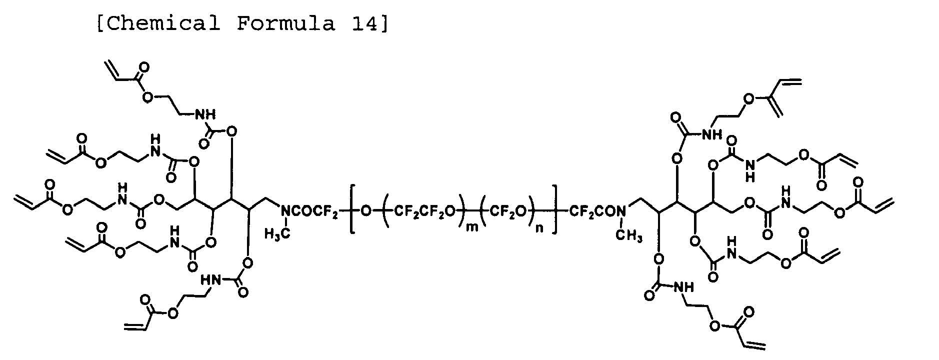

### (Example 5)

In a 50 ml reaction vessel, 30 g (0.02 mol) of poly(perfluoroalkylene ether) having carboxylic acid ethyl esters at both terminal ends thereof (the number (m) of perfluoroethylene group is 8 on average and the number (n) of perfluoromethylene group is 5 on average per one molecule), 1.28 g (0.21 mol) of monoethanolamine and 2.54 g (0.21 mol) of tris(hydroxymethyl)aminomethane were placed, and heated with stirring at 120°C for 2 hours. After being confirmed to become clear and homogeneous, the reaction liquid was further heated with stirring under reduced pressure for 3 hours. After the reaction liquid was cooled to 60°C or below, 68.5 g of MEK was added thereto. Subsequently, 0.02 g of dibutyl tin dilaurate was added, and then 11.9g (0.084mol) of 2-acryloyloxyethyl isocyanate was added dropwise thereto over 30 minutes while the internal temperature was maintained at 50 to 60°C. After the dropwise addition was completed, the reaction liquid was further stirred at 80°C for 4 hours to obtain a MEK solution of fluorine compound (5) (40% by mass of the non-volatile content).

After MEK was distilled off from the obtained MEK solution of fluorine compound (5), spectrum analyses were conducted whereby the following spectra were obtained.
[IR spectrum]
810, 1410, 1650 cm⁻¹: acryloyl group
1710 cm⁻¹: amide group
1200 cm⁻¹: -CF₂-
[¹H-NMR spectrum]
(ppm, 400 MHz, solvent: acetone-d₆, standard: TMS)
3.30-3.85(m, 12H)
4.10-4.60(m, 14H)
4.30-4.50(m, 12H)
5.88 (d, J=10.4 Hz, 4H)
6.13 (dd, J=17.2, 10.4 Hz, 4H)
6.37 (d, J=16.0 Hz, 4H)

From the results of IR and NMR spectrum analyses, the fluorine compound (5) was identified to be a compound of following structural formula.

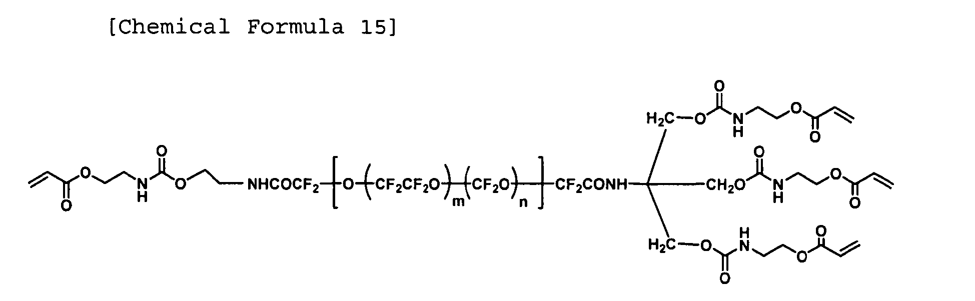

### (Example 6)

In a 50 ml reaction vessel, 30 g (0.02 mol) of poly(perfluoroalkylene ether) having carboxylic acid ethyl esters at both terminal ends thereof (the number (m) of perfluoroethylene group is 8 on average and the number (n) of perfluoromethylene group is 5 on average per one molecule), and 4.41 g (0.042 mol) of diethanolamine were placed, and heated with stirring at 100°C for 2 hours. After being confirmed to become clear and homogeneous, the reaction liquid was further heated with stirring under reduced pressure for 3 hours while produced ethanol is removed therefrom. After the reaction liquid was cooled to 40°C or below, 200 g of ethyl acetate was added thereto. Subsequently, 8.90 g (0.09 mol) of triethylamine was added and 7.60 g (0.084mol) of acryloyl chloride was added dropwise thereto over 30 minutes while the internal temperature was maintained at 40°C or below. After the dropwise addition was completed, the reaction liquid was further stirred at room temperature for 4 hours. Subsequently, the reaction liquid was washed with water and then saturated saline to obtain an ethyl acetate solution of fluorine compound (6) (the content of the nonvolatile components was adjusted to 40% by mass).

After ethyl acetate was distilled off from the obtained ethyl acetate solution of fluorine compound (6), spectrum analyses were conducted whereby the following spectra were obtained.
[IR spectrum]
810, 1410, 1650 cm⁻¹: acryloyl group
1720 cm⁻¹: amide group
1200 cm⁻¹: -CF₂-
[¹H-NMR spectrum]
(ppm, 400 MHz, solvent: acetone-d₆, standard: TMS)
3.50-3.95(m, 8H)
4.30-4.90(m, 8H)
5.89 (d, J=10.4 Hz, 4H)
6.13 (dd, J=17.2, 10.4 Hz, 4H)
6.40 (d, J=17.6 Hz, 4H)

From the results of IR and NMR spectrum analyses, the fluorine compound (6) was identified to be a compound of following structural formula.

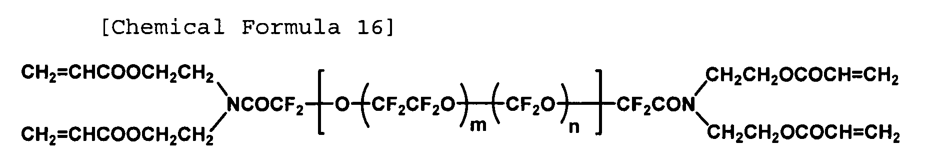

### (Example 7)

An ethyl acetate solution of fluorine compound (7) (40% by mass of the non-volatile content) was obtained in the same manner as in Example 1, except that 5.08 g (0.042 mol) of tris(hydroxymethyl)amino methane was used in place of diethanolamine used in Example 6 and acryloyl chloride was added in amount of 11.4 g (0.126 mol).

After ethyl acetate was distilled off from the obtained ethyl acetate solution of fluorine compound (7), spectrum analyses were conducted whereby the following spectra were obtained.
[IR spectrum]
810, 1410, 1650 cm⁻¹: acryloyl group
1720 cm⁻¹: amide group
1200 cm⁻¹: -CF₂-
[¹H-NMR spectrum]
(ppm, 400 MHz, solvent: acetone-d₆, standard: TMS)
4.65(s, 12H)
5.89 (d, J=10.4 Hz, 4H)
6.12 (dd, J=17.2, 10.4 Hz, 4H)
6.42 (d, J=17.6 Hz, 4H)

From the results of IR and NMR spectrum analyses, the fluorine compound (7) was identified to be a compound of following structural formula.

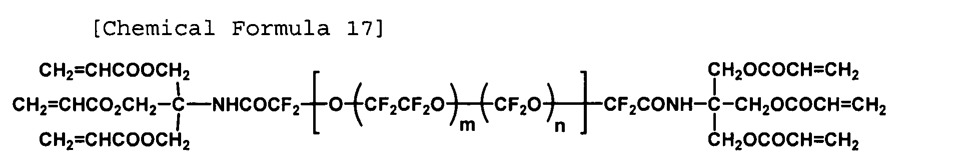

### (Comparative Example 1)

In a 200 ml three-neck flask, 38.4 g of hexamethylene diisocyanate trimer ("SUMIDUR N3300" manufactured by SUMITOMO BAYER URETHANE CO., LTD.; content of NCO groups: 21.9%) was dissolved in 148 g of methyl ethyl ketone (hereinafter referred to as "MEK"), and then 0.4 g of dibutyl tin dilaurate was added. In air atmosphere, at the internal temperature of 60 °C, 50.0 g of a poly(perfluoroalkylene ether) having hydroxyl groups at both terminal ends thereof ("FLUOROLINK D10\H" manufactured by SOLVAY SOLEXIS INC.) was added dropwise with stirring over 3 hours, and further stirred for 6 hours. Subsequently, 8.13 g of 2-hydroxyethyl acrylate was added dropwise over 10 minutes, and stirred for 3 hours. After confirmed that the absorption of the NCO groups was completely disappeared from an IR spectrum, an MEK solution of fluorine compound (8) (40 % by mass of the non-volatile content) was obtained.

MEK was distilled off from the obtained MEK solution of fluorine compound (8) and from the result of IR spectral analysis thereafter conducted, the presence of IR absorptions which could be attributed to acryloyl group, nurate ring and -CF₂- were confirmed.
[IR spectrum]
810, 1410, 1650 cm⁻¹: acryloyl group
1690 cm⁻¹: nurate ring
1200 cm⁻¹: -CF₂-

The fluorine compounds (1) to (7) obtained from Examples 1 to 7 and the fluorine compound (8) obtained from Comparative Example 1 were used to prepare active energy ray-curable resin compositions.

### (Example 8)

10 g of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (1)) of the MEK solution of fluorine compound (1)
(40% by mass of the non-volatile content) obtained in Example 1, 0.32 g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (1).

### (Example 9)

An active energy ray-curable resin composition (2) was obtained in the same manner as in Example 6, except that the amount of the MEK solution of fluorine compound (1) (40% by mass of the non-volatile content) used in Example 8 was changed from 0.5 g to 1.5 g (0.6 g in terms of the amount of the fluorine compound (1)) and the amount of MEK was changed from 5.7 g to 5.1 g.

### (Example 10)

10 g of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (2)) of the MEK solution of fluorine compound (2) (40% by mass of the non-volatile content) obtained in Example 2, 0.32 g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (3).

### (Example 11)

An active energy ray-curable resin composition (4) was obtained in the same manner as in Example 8, except that the amount of the MEK solution of fluorine compound (2) (40% by mass of the non-volatile content) used in Example 8 was changed from 0.5 g to 1.5 g (0.6 g in terms of the amount of the fluorine compound (2)) and the amount of MEK was changed from 5.7 g to 5.1 g.

### (Example 12)

10 g of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (3)) of the MEK solution of fluorine compound (3) (40% by mass of the non-volatile content) obtained in Example 3, 0.32 g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (5).

### (Example 13)

An active energy ray-curable resin composition (6) was obtained in the same manner as in Example 10, except that the amount of the MEK solution of fluorine compound (3) (40% by mass of the non-volatile content) used in Example 12 was changed from 0.5 g to 1.5 g (0.6 g in terms of the amount of the fluorine compound (3)) and the amount of MEK was changed from 5.7 g to 5.1 g.

### (Example 14)

10 g of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (4)) of the MEK solution of fluorine compound (4) (40% by mass of the non-volatile content) obtained in Example 4, 0.32 g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (7).

### (Example 15)

An active energy ray-curable resin composition (8) was obtained in the same manner as in Example 12, except that the amount of the MEK solution of fluorine compound (4) (40% by mass of the non-volatile content) used in Example 14 was changed from 0.5 g to 1.5 g (0.6 g in terms of the amount of the fluorine compound (4)) and the amount of MEK was changed from 5.7 g to 5.1 g.

### (Example 16)

10_{g} of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (5)) of the MEK solution of fluorine compound (5) (40% by mass of the non-volatile content) obtained in Example 5, 0.32g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (9).

### (Example 17)

An active energy ray-curable resin composition (10) was obtained in the same manner as in Example 14, except that the amount of the MEK solution of fluorine compound (5) (40% by mass of the non-volatile content) used in Example 16 was changed from 0.5 g to 1.5 g (0.6 g in terms of the amount of the fluorine compound (5)) and the amount of MEK was changed from 5.7 g to 5.1 g.

### (Example 18)

20 g (8g in terms of the amount of the fluorine compound (3)) of the MEK solution of fluorine compound (3) (40% by mass of the non-volatile content) obtained in Example 3 and 0.32 g of photopolymerization initiator ("IRGACURE 184" manufactured by CIBA SPECIALTY CHEMICALS INC.; 1-hydroxycyclohexyl phenyl ketone) were homogeneously mixed to obtain a solution of homopolymer resin of fluorine compound (3).

### (Example 19)

10 g of ultraviolet ray-curable resin ("UNIDIC 17-806" manufactured by DIC CORPORATION, 80% by mass of the non-volatile content; polyfunctional urethane acrylate), 0.2 g (0.08 g in terms of the amount of the fluorine compound (6)) of the ethyl acetate solution of fluorine compound (6) (40% by mass of the non-volatile content) obtained in Example 6, 0.32 g of photopolymerization initiator ("IRGACURE 184" manufactured by CIBA SPECIALTY CHEMICALS INC.; 1-hydroxycyclohexyl phenyl ketone) and 5.88 g of MEK were homogeneously mixed to obtain an active energy ray-curable resin composition (11).

### (Example 20)

An active energy ray-curable resin composition (12) was obtained in the same manner as in Example 3, except that the amount of the ethyl acetate solution of fluorine compound (6) (40% by mass of the non-volatile content) used in Example 19 was changed from 0.2 g to 0.6 g (0.24 g in terms of the amount of the fluorine compound (6)) and the amount of MEK was changed from 5.88 g to 5.71 g.

### (Example 21)

10 g of ultraviolet ray-curable resin ("UNIDIC 17-806" manufactured by DIC CORPORATION, 80% by mass of the non-volatile content; polyfunctional urethane acrylate), 0.2 g (0.008 g in terms of the amount of the fluorine compound (7)) of the ethyl acetate solution of fluorine compound (7) (40% by mass of the non-volatile content) obtained in Example 7, 0.32 g of photopolymerization initiator ("IRGACURE 184" manufactured by CIBA SPECIALTY CHEMICALS INC.; 1-hydroxycyclohexyl phenyl ketone) and 5.88 g of MEK were homogeneously mixed to obtain an active energy ray-curable resin composition (13).

### (Example 22)

An active energy ray-curable resin composition (14) was obtained in the same manner as in Example 21, except that the amount of the ethyl acetate solution of fluorine compound (7) (40% by mass of the non-volatile content) used in Example 21 was changed from 0.2 g to 0.6 g (0.24 g in terms of the amount of the fluorine compound (7)) and the amount of ethyl acetate was changed from 5.88 g to 5.71 g.

### (Example 23)

20 g (8g in terms of the amount of the fluorine compound (7)) of the ethyl acetate solution of fluorine compound (7) (40% by mass of the non-volatile content) obtained in Example 7 and 0.32 g of photopolymerization initiator ("IRGACURE 184" manufactured by CIBA SPECIALTY CHEMICALS INC.; 1-hydroxycyclohexyl phenyl ketone) were homogeneously mixed to obtain a solution of homopolymer resin of fluorine compound (7).

### (Comparative Example 2)

10 g of ultraviolet ray-curable resin ("UNIDIC 17-806" manufactured by DIC CORPORATION, 80% by mass of the non-volatile content; polyfunctional urethane acrylate), 0.5 g (0.2 g in terms of the amount of the fluorine compound (8)) of the MEK solution of fluorine compound (8) (40% by mass of the non-volatile content) obtained in Comparative Example 1, 0.32 g of photopolymerization initiator ("IRGACURE 184" manufactured by CIBA SPECIALTY CHEMICALS INC.; 1-hydroxycyclohexyl phenyl ketone) and 5.7 g of MEK were homogeneously mixed to obtain an active energy ray-curable resin composition (15).

### (Comparative Example 3)

An active energy ray-curable resin composition (16) was obtained in the same manner as in Comparative Example 2, except that the amount of the MEK solution of fluorine compound (8) (40% by mass of the non-volatile content) used in Comparative Example 2 was changed from 0.5 g to 1.5 g (0.6 g in terms of the amount of the fluorine compound (8)) and the amount of MEK was changed from 5.7 g to 5.1 g.

### (Comparative Example 4)

10g of ultraviolet ray-curable resin ("UNIDIC 17-806" manufactured by DIC CORPORATION, 80% by mass of the non-volatile content; polyfunctional urethane acrylate), 0.32 g of photopolymerization initiator ("IRGACURE 184" manufactured by CIBA SPECIALTY CHEMICALS INC.; 1-hydroxycyclohexyl phenyl ketone) and 6.0 g of MEK were homogeneously mixed to obtain an active energy ray-curable resin composition (17).

### (Compatibility Test for Fluorine Compound)

Each of the active energy ray-curable resin compositions obtained from Examples 8 to 23 and Comparative Examples 2 to 4 was placed in a transparent glass vessel, and then turbidity of the resin compositions was visually observed, and compatibility was evaluated on the following criteria:
A: Not turbid, transparent
B: Slightly turbid
C: Turbid

### (Preparation of Evaluation Samples)

Each of the active energy ray-curable resin compositions (1) to (17) obtained from Examples 8 to 23 and Comparative Examples 2 to 4, the solution of homopolymer resin of fluorine compound (3) obtained from Example 18, and the solution of homopolymer resin of fluorine compound (7) obtained from Example 23 was coated on a 125 µm thick PET film ("COSMOSHINE A4100" manufactured by TOYOBO CO., LTD.; a product treated for easy adhesion), using a bar coater (#05), and then dried at 60 °C for 5 minutes (film thickness after drying: 10 µm). Subsequently, using an ultraviolet radiation apparatus (manufactured by GS YUASA CORP.; high pressure mercury lamp, 120W), an ultraviolet ray was irradiated (with an irradiation dose of 5 kJ/m² in air atmosphere) to obtain a cured coating film.

### (Oil-based Ink Adhesion Property Test)

On the surface of each of the obtained cured coating films of active energy ray-curable resin compositions, a line was drawn with an oil-based blue felt pen ("MAGIC INK (registered trademark)" manufactured by TETANISHI CHEMICAL INDUSTRY CO., LTD.) and adhesion property of the oil-based ink was visually observed. The result was evaluated on the following criteria.
AA: The oil-based ink is repelled into a ball shape.
A: The ink is not repelled into a ball shape, but repelled into a line shape (the line width is less than 25% of the pen tip width of the felt pen).
B: The ink is not repelled into a ball shape, but repelled into a line shape (the line width is in a range of 25% to less than 50% of the pen tip width of the felt pen).
C: The ink is repelled into a line shape (the line width is in a range of 50% to less than 90% of the pen tip width of the felt pen).
D: The ink is repelled into a line shape (the line width is in a range of 90% to less than 100% of the pen tip width of the felt pen).
E: The repelling of the ink does not occur.

### (Fingerprint Adhesion Property Test)

A finger was pressed against a surface of each of the cured coating films of the active energy ray-curable resin compositions, and the adhered fingerprint was examined by an optical microscope (40 x magnifications). A ratio of the area of the adhered fingerprint to the area of the pressed finger was evaluated on the following criteria:
A: The area of the adhered fingerprint is less than 30%.
B: The area of the adhered fingerprint is in a range of 30% to less than 60%.
C: The area of the adhered fingerprint is in a range of 60% to less than 95%.
D: The area of the adhered fingerprint is 95% or more.

### (Fingerprint Wipe off property Test)

The fingerprint-adhered samples from the fingerprint adhesion property test were used and each of the fingerprint stain was wiped off with a wiping cloth ("JK WIPER 150-S" manufactured by NIPPON PAPER CRECIA CO., LTD.) until the fingerprint was not visually observed and the number of wiping was measured. In this test, as the number of wiping is increased, fingerprint wipe off property is lowered.

Compositions of the active energy ray-curable resin compositions obtained from Examples 8 to 23 and Comparative Examples 2 to 4 and evaluation results of the cured coating films thereof are shown in Tables 1 to 3. In addition, evaluation results of the cured coating films made from the fluorine compounds (3) and (7) alone (Examples 18 and 23), respectively, are shown in Table 2. In Table 2, "A" in the "Compatibility" test for Examples 18 and 23 indicates that there is no phase separation in the case of the fluorine compound alone. In Table 3, "-" in the "Compatibility" test for Comparative Example 4 indicates that evaluation was not made.

**[Table 1]**

| | | Examples | | | | | | | |
|---|---|---|---|---|---|---|---|---|---|
| | | 8 | 9 | 10 | 11 | 12 | 13 | 14 | 15 |
| Kinds of fluorine compound | | (1) | (1) | (2) | (2) | (3) | (3) | (4) | (4) |
| Composition (g) | Ultraviolet-curable resin (80% by mass of the non-volatile content) | 10 | 10 | 10 | 10 | 10 | 10 | 10 | 10 |
| | Fluorine compound | 0.2 | 0.6 | 0.2 | 0.6 | 0.2 | 0.6 | 0.2 | 0.6 |
| | Photopolymerization initiator | 0.32 | 0.32 | 0.32 | 0.32 | 0.32 | 0.32 | 0.32 | 0.32 |
| | MEK | 6 | 6 | 6 | 6 | 6 | 6 | 6 | 6 |
| Evaluation result | Compatibility | A | A | A | A | A | A | A | A |
| | Oil-based ink adhesion property | B | AA | A | AA | A | AA | B | A |
| | Fingerprint adhesion property | A | A | B | A | A | A | A | A |
| | Fingerprint wipe off property | 15 | 10 | 15 | 10 | 15 | 10 | 15 | 15 |

**[Table 2]**

| | | Examples | | | | | | | |
|---|---|---|---|---|---|---|---|---|---|
| | | 16 | 17 | 18 | 19 | 20 | 21 | 22 | 23 |
| Kinds of fluorine compound | | (5) | (5) | (3) | (6) | (6) | (7) | (7) | (7) |
| Composition (g) | Ultraviolet-curable resin (80% by mass of the non-volatile content) | 10 | 10 | | 10 | 10 | 10 | 10 | |
| | Fluorine compound | 0.2 | 0.6 | 8 | 0.08 | 0.24 | 0.08 | 0.24 | 8 |
| | Photopolymerization initiator | 0.32 | 0.32 | 0.32 | 0.32 | 0.32 | 0.32 | 0.32 | 0.32 |
| | Ethyl acetate | | | | 0.12 | 0.29 | 0.12 | 0.29 | 12 |
| | MEK | 6 | 6 | 12 | 5.88 | 5.71 | 5.88 | 5.71 | |
| Evaluation result | Compatibility | A | A | A | A | B | A | A | A |
| | Oil-based ink adhesion property | B | AA | AA | B | A | B | AA | AA |
| | Fingerprint adhesion property | A | A | A | A | A | A | A | A |
| | Fingerprint wipe off property | 15 | 15 | 10 | 20 | 20 | 15 | 10 | 10 |

**[Table 3]**

| | | Comparative Examples | | |
|---|---|---|---|---|
| | | 2 | 3 | 4 |
| Kinds of fluorine compound | | (8) | (8) | none |
| Composition (g) | Ultraviolet-curable resin (80% by mass of the non-volatile content) | 10 | 10 | 10 |
| | Fluorine compound | 0.2 | 0.6 | |
| | Photopolymerization initiator | 0.32 | 0.32 | 0.32 |
| | MEK | 6 | 6 | 6 |
| Evaluation result | Compatibility | A | C | - |
| | Oil-based ink adhesion property | D | C | E |
| | Fingerprint adhesion property | C | D | D |
| | Fingerprint wipe off property | 20 | 25 | 30 or more |

From the evaluation results for Examples 8 to 23 shown in Tables 1 and 2, it was seen that the fluorine compound of the present invention had excellent compatibility with other resins. In addition, it was seen that the cured coating film of the active energy ray-curable resin composition using the fluorine compound of the present invention had low oil-based ink and fingerprint adhesion but excellent stain-proof property. Further, it was seen that, even when stain occurred, it could be easily wiped off.

From the evaluation results for Examples 18 and 23 shown in Table 2, it was seen that the cured coating film of the active energy ray-curable resin composition using the fluorine compound of the present invention alone also had low oil-based ink and fingerprint adhesion but excellent stain-proof property. Further, it was seen that, even when stain occurred, it can be easily wiped off.

Meanwhile, from the evaluation results for Comparative Examples 2 to 4 in Table 3, the following facts were seen.

In Comparative Examples 2 and 3, a fluorine compound obtained by reacting a poly(perfluoroalkylene ether) having hydroxyl groups at both terminal ends thereof, a diisocyanate, and an acrylate having a hydroxyl group was used. However, in the course of synthesis, a compound having only a poly(perfluoroalkylene ether) chain is inevitabily contained in the fluorine compound, and thus the fluorine compound has low compatibility with other ultraviolet-curable resins. When the compound was added in a large amount, the resin composition became turbid. In addition, Comparative Examples 2 and 3 showed insufficient preventive effect on the adhesion of oil-based ink and fingerprints, particularly, insufficient preventive effect on the adhesion of fingerprints, which indicates that they did not have sufficient stain-proof property. Further, it was also seen that they had insufficient stain wipe off property.

In Comparative Example 4 that a fluorine compound was not used, oil-based ink and fingerprint were adhered, which shows that the composition did not have stain-proof property. In addition, it showed very low stain wipe off property.
While the invention has been shown and described with reference to certain exemplary embodiments thereof, it will be understood by those skilled in the art that various changes in form and details may be made therein without departing from the spirit and scope of the invention as defined by the appended claims.

## Claims

1. A fluorine compound represented by the following general formula (1). 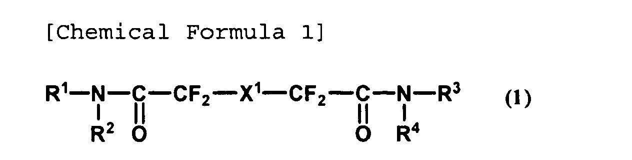 (In the general formula (1), X¹ represents a poly(perfluoroalkylene ether) chain; and R¹ to R⁴ independently represent a hydrogen atom, an alkyl group, following general formula (2) or (3), provided that at least one of R¹ and R² is following general formula (2) or (3) and at least one of R³ and R⁴ is following general formula (2) or (3).) 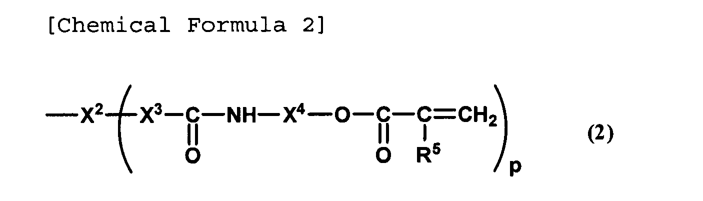 (In the general formula (2), X² represents a linear or branched hydrocarbon group; X³ represents an oxygen atom or a sulfur atom; X⁴ represents a linear or branched alkylene group; R⁵ represents a hydrogen atom or a methyl group; and p represents an integer of 1 to 5.) 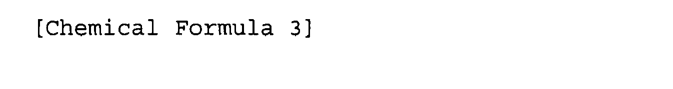 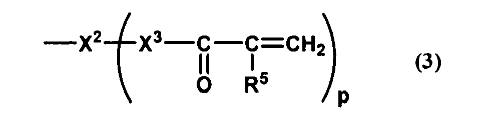 (In the general formula (3), X² represents a linear or branched hydrocarbon group; X³ represents an oxygen atom or a sulfur atom; R⁵ represents a hydrogen atom or a methyl group; and p represents an integer of 1 to 5.)

2. An active energy ray-curable resin composition comprising the fluorine compound according to Claim 1.

3. An article having a cured coating film of the fluorine compound according to Claim 1.

4. An article having a cured coating film of the active energy ray-curable resin composition according to Claim 2.

5. A method of preparing the fluorine compound according to Claim 1, comprising: reacting a compound having a poly(perfluoroalkylene ether) chain and having carboxylic groups or carboxylic alkyl esters at both terminal ends thereof with an alkyl amine having a hydroxyl group or a thiol group, and then further reacting the resulting product with a (meth)acrylate having an isocyanate group, or, with a (meth)acrylic acid, a (meth)acryloyl halide or a (meth)acrylic anhydride.
